# EUROPÄISCHE PATENTSCHRIFT

(11) **EP 1 427 956 B1**
(45) Veröffentlichungstag und Bekanntmachung des Hinweises auf die Patenterteilung: **14.03.2007**
(21) Anmeldenummer: 02779392.6
(22) Anmeldetag: 20.09.2002
(51) Int. Cl.: F16K 3/08

(54) **DURCHFLUSSSTEUERVORRICHTUNG**
FLOW RATE ADJUSTING DEVICE
DISPOSITIF DE REGLAGE DE DEBIT

(30) Priorität: 21.09.2001 DE 10146625
(43) Veröffentlichungstag der Anmeldung: 16.06.2004
(73) Patentinhaber: Micro Mechatronic Technologies AG, 57080 Siegen (DE)
(72) Erfinder: HEMPELMANN, Willi, 57426 Olpe (DE)
(74) Vertreter: Klingseisen, Franz
(86) Internationale Anmeldenummer: PCT/EP2002/010590
(87) Internationale Veröffentlichungsnummer: WO 2003/027549

(56) Entgegenhaltungen:
- EP-A- 0 333 015
- EP-A- 0 373 123
- EP-A- 0 544 539
- GB-A- 1 456 601

## Beschreibung

Die Erfindung betrifft eine Durchflusssteuervorrichtun, insbesondere für Flüssigkeiten, gemäß dem Oberbegriff des Anspruchs 1.

Eine solche Durchflusssteuervorrichtung ist zum Beispiel aus der EP-A-0 544 539 bekannt.

Aufgabe der Erfindung ist es, eine Durchflusssteuervorrichtung so auszubilden, dass der Durchflussweg und auch Durchflussmengen eingestellt werden können.

Diese Aufgabe wird erfindungsgemäß durch die Merkmale im Anspruch 1 gelöst. Dadurch, dass die sich seitlich von den Durchtrittsbohrungen erstreckenden Ausnehmungen in den aneinanderliegenden Seitenflächen der relativ zueinander verdrehbaren Scheiben sich unterschiedlich überlappen können, können z. B. ausgehend von einer maximalen Durchflussmenge bei fluchtenden Durchtrittsbohrungen auch sehr kleine Durchflussmengen dadurch eingestellt werden, dass sich die auslaufenden Spitzen von sich verjüngenden Ausnehmungen etwas überlappen. Auf diese Weise können Durchflussmengen stufenlos bis in den Bereich von Mikrolitem bis Nanolitern eingestellt werden.

Beispielsweise Ausführungsformen der Erfindung werden nachfolgend anhand der Zeichnung näher erläutert. Es zeigen
- Fig. 1: eine perspektivische Ansicht einer Durchflusssteuervorrichtung mit Steuereinheit,
- Fig. 2: einen schematischen Längsschnitt durch eine Ausführungsform der Durchflusssteuervorrichtung mit mehreren Steuerscheiben,
- Fig. 3: in perspektivischer Ansicht eine stationäre Steuerscheibe,
- Fig. 4: in perspektivischer Ansicht eine verdrehbare Steuerscheibe,
- Fig. 5: die Befestigung einer verdrehbaren Steuerscheibe an einem Schneckenrad
- Fig. 6: eine Schnittansicht durch eine Antriebseinrichtung des Schneckenrades, und
- Fig. 7: eine abgewandelte Ausführungsform einer Steuerscheibe.

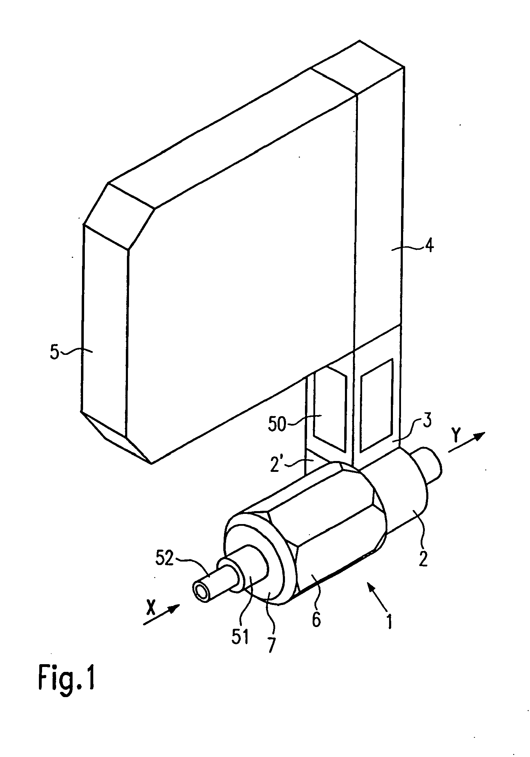

In Fig. 1 ist mit 1 die Durchflusssteuervorrichtung bezeichnet, die in Achsrichtung von einer Flüssigkeit durchströmt wird, wie dies durch die Pfeile X und Y angedeutet ist. An dem Gehäuse 2 der Durchflusssteuervorrichtung ist über einen Ansatz 2' ein Kupplungs- und Dichtungsadapter 3 angebracht, an dem ein Motorgehäuse 4 befestigt ist, in dem beispielsweise ein Gleichstrommotor oder ein Linearmotor angeordnet ist. An dem Motorgehäuse 4 ist eine Steuereinheit 5 mit elektronischen Steuereinrichtungen angebracht.

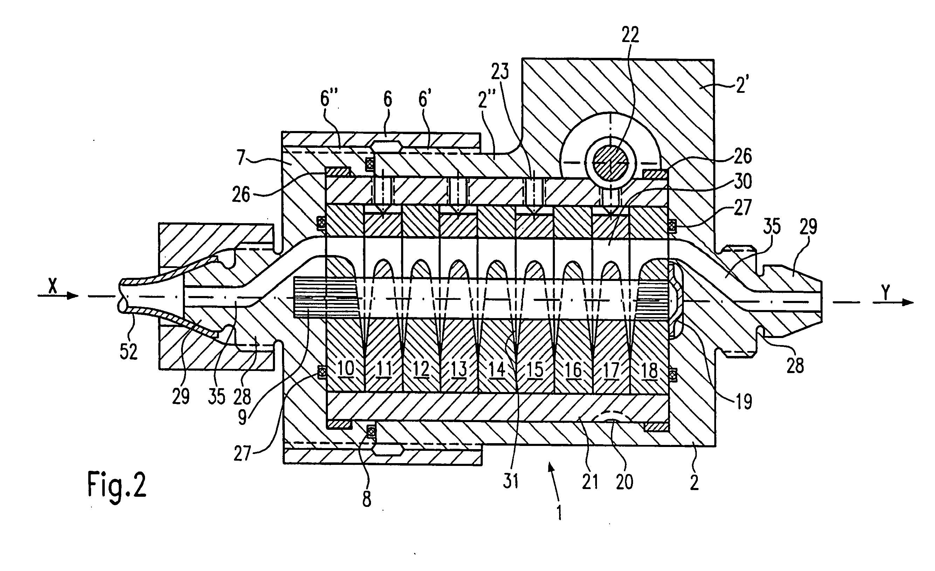

Fig. 2 zeigt schematisch einen Längsschnitt durch die Durchflusssteuervorrichtung 1. Auf dem rohrförmigen Abschnitt 2" des Gehäuses 2 ist eine Schraubhülse 6 mit einem Gewindeabschnitt 6' aufgeschraubt, die mit einem getrennt davon ausgebildeten Gewindeabschnitt 6" ein Gehäuseteil 7 an dem rohrförmigen Gehäuseabschnitt 2" anliegend hält. Mit 8 ist eine Dichtung, beispielsweise ein O-Ring zwischen den beiden Gehäuseteilen 2 und 7 bezeichnet. Der Gewindeabschnitt 6' ist beispielsweise als Rechtsgewinde ausgebildet, während der Gewindeabschnitt 6" als Linksgewinde ausgebildet ist. Hierdurch können durch die Schraubhülse 6 die beiden Gehäuseteile 2 und 7 dicht aneinanderliegend fixiert werden.

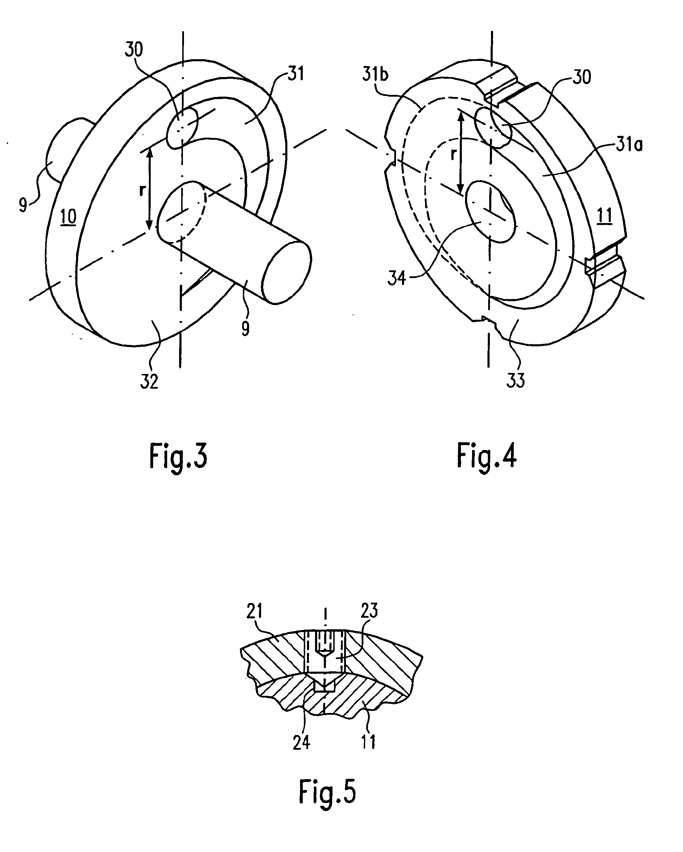

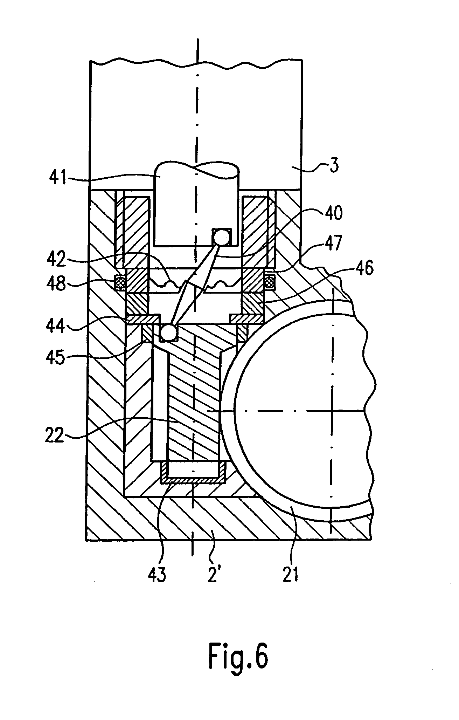

In einer mittigen Bohrung des Gehäuseteils 7 ist eine feststehende Steckachse 9 eingesteckt, die auf dem Umfang ein Zahnwellenprofil oder eine Verzahnung aufweist, die mit einem entsprechenden Zahnwellenprofil in der Gehäusebohrung in Eingriff steht. Auf dieser Steckachse 9 sind bei dem dargestellten Ausführungsbeispiel neun Steuerscheiben 10 bis 18 angeordnet. Die erste Steuerscheibe 10 und die Steuerscheibe 18 am gegenüberliegenden Ende sind über das Zahnwellenprofil stationär auf der Steckachse 9 festgelegt, ebenso die Steuerscheiben 12, 14 und 16, während die dazwischenliegenden Steuerscheiben 11, 13, 15 und 17 durch einen größeren Durchmesser der Bohrung auf der Steckachse 9 verdrehbar sind. Die Steuerscheiben 10 bis 18 werden durch die Vorspannung einer Tellerfeder 19 dicht aneinanderliegend gehalten, die in einer Ausnehmung des Gehäuses 2 angeordnet ist. Die Steuerscheiben 10 bis 18 sind von einem hülsenförmigen Schneckenrad 21 umgeben, das durch eine Schneckenwelle 22 in Drehung versetzt werden kann, die von dem im Motorgehäuse 4 angeordneten Antriebsmotor verdreht wird, wie Fig. 6 zeigt. Die verdrehbaren Steuerscheiben 11, 13, 15 und 17 sind jeweils mit dem Schneckenrad 21 verbunden, während die stationären Steuerscheiben 10, 12, 14, 16 und 18 auf dem Innenumfang des hülsenförmigen Schneckenrades 21 gleiten können oder auch einen kleineren Außendurchmesser haben können als der Innendurchmesser des hülsenförmigen Schneckenrades 21. Bei dem dargestellten Ausführungsbeispiel sind die verdrehbaren Steuerscheiben über eine Madenzentrierschraube 23 mit dem Schneckenrad 21 spielfrei verbunden, wie dies Fig. 5 zeigt. Hierbei sind auf dem Außenumfang einer verdrehbaren Steuerscheibe (Fig. 4) beispielsweise vier keilförmig ausgebildete Mitnehmernuten 24 ausgebildet, in die die kegelförmige Spitze der Madenzentrierschraube 23 eingreift. Diese Madenzentrierschrauben sind mit einem Innensechskant versehen, wie in Fig. 5 angedeutet.

Das hülsenförmige Schneckenrad 21 weist im Bereich der Steuerscheibe 17 ein Schneckengewinde 20 auf dem Außenumfang auf, das mit dem Gewinde einer Schneckenwelle 22 in Eingriff steht. Das hülsenförmige Schneckenrad 21 ist über Gleitlager 26 an den gegenüberliegenden Enden in den beiden Gehäuseteilen 2 und 7 verdrehbar gelagert.

An den Stirnseiten der beiden Gehäuseteile 2 und 7 ist jeweils eine Dichtung 27 vorgesehen, welche an den Seitenflächen der stationären Steuerscheiben 10 und 18 anliegt. Beide Gehäuseteile 2 und 7 sind jeweils mit einem Anschlussstutzen 28 mit Außengewinde und einem Bördelkonus 29 für eine Bördelverschraubung eines Anschlussschlauches 52 versehen. An dem Anschlussstutzen 28 wird über eine Bördelmutter 51 der Schlauch 52 oder ein Bündelrohr dicht angeschlossen.

Die Steuerscheiben 10 bis 18 sind jeweils mit einer Durchtrittsbohrung 30 versehen, die in Achsrichtung an den einzelnen Steuerscheiben außermittig angebracht ist, wie dies Fig. 3 und 4 zeigen. Bei der stationären Steuerscheibe 10 ist auf einer Seitenfläche 32 der Steuerscheibe ausgehend von der Durchtrittsbohrung 30, die in einem Abstand r von der Achse angeordnet ist, eine sich in der Breite und Tiefe verjüngende Ausnehmung 31 ausgebildet, die sich mit dem Abstand r von der Achse kreisbogenförmig um diese erstreckt. Bei dem in Fig. 3 wiedergegebenen Ausführungsbeispiel verläuft diese sich verjüngende Ausnehmung 31 nahezu in einem Halbkreis um die Achse auf der Seitenfläche 32. Die gegenüberliegende Seitenfläche der Steuerscheibe 10 ist glatt ausgebildet und nur mit der Durchtrittsbohrung 30 versehen.

Fig. 4 zeigt eine verdrehbare Steuerscheibe, beispielsweise die Steuerscheibe 11. Auf der der Seitenfläche 32 der stationären Steuerscheibe 10 gegenüberliegenden Seitenfläche 33 der verdrehbaren Steuerscheibe 11 ist ausgehend von der Durchtrittsbohrung 30 eine sich verjüngende Ausnehmung 31a auf etwa einem Halbkreisbogen ausgebildet, die in ihrer Ausgestaltung identisch ist mit der Ausnehmung 31 an der Steuerscheibe 10, aber in Gegenrichtung verläuft. Während die Ausnehmung 31 an der Steuerscheibe 10 sich im Uhrzeigersinn von der Durchtrittsbohrung 30 aus erstreckt, verläuft die Ausnehmung 31a an der gegenüberliegenden Seitenfläche 33 der Steuerscheibe 11 in Gegenrichtung, so dass bei Ausrichtung der Durchtrittsbohrungen 30 die eine Ausnehmung 31 sich im Uhrzeigersinn und die Ausnehmung 31 a der gegenüberliegenden Steuerscheibe sich im Gegenuhrzeigersinn um die Achse erstreckt. Durch Verdrehen der Steuerscheibe 11 relativ zur Steuerscheibe 10 kann der Durchtrittsquerschnitt längs der Ausnehmungen 31 und 31a stetig verkleinert werden, bis sich lediglich die auslaufenden Spitzen der beiden Ausnehmungen 31 und 31a geringfügig überlappen, so dass nur noch ein minimaler Durchtrittsquerschnitt verbleibt.

Die verdrehbare Steuerscheibe 11 weist auf der der Seite 33 gegenüberliegenden Seitenfläche eine entsprechende, von der Durchtrittsbohrung 30 ausgehende Ausnehmung 31b auf, wie durch gestrichelte Linien in Fig. 4 angedeutet. Die Ausnehmung 31b erstreckt sich in der Gegenrichtung zu der auf der Seitenfläche 33 bzw. in die gleiche Richtung wie die Ausnehmung 31 an der Steuerscheibe 10.

In entsprechender Weise ist die stationäre Steuerscheibe 12 mit einer längs eines Kreisbogens sich verjüngenden Ausnehmung 31a und 31b auf beiden Seitenflächen ausgebildet. Die Steuerscheiben 11 bis 17 sind hinsichtlich Anordnung und Ausbildung der Ausnehmungen 31a und 31b identisch ausgebildet, wobei sich die jeweiligen Ausnehmungen hinsichtlich Breite und Tiefe stetig längs des Kreisbogens verjüngen. Die stationäre Steuerscheibe 18 am gegenüberliegenden Ende ist spiegelbildlich zu der Steuerscheibe 10 mit einer Ausnehmung 31 auf nur einer Seitenfläche ausgebildet.

In Fig. 2 sind die Durchtrittsbohrungen 30 aller Steuerscheiben 10 bis 18 fluchtend dargestellt, so dass sich ein Durchgangskanal mit einem minimalen Durchmesser entsprechend dem der Bohrungen 30 ergibt. Ein vom Anschlussstutzen 28 ausgehender Durchtrittskanal 35 verläuft derart gekrümmt durch die Gehäuseteile 2 und 7, dass er mit der außermittigen Durchtrittsbohrung 30 der Steuerscheiben 10 und 18 fluchtet. Bei einem Ausführungsbeispiel kann der Innendurchmesser des Durchtrittkanals 35 und der Innendurchmesser der Durchtrittsbohrungen 30 beispielsweise 5 mm betragen, wobei sich die Ausnehmungen 31 ausgehend von den Durchtrittsbohrungen 30 in der Breite und Tiefe stetig bis auf Null verjüngen.

Die verdrehbaren Steuerscheiben 11, 13, 15 und 17 werden synchron durch das Schneckenrad 21 relativ zu den stationären Steuerscheiben 10, 12, 14, 16 und 18 verdreht, so dass zwischen den aneinanderliegenden Seitenflächen der einzelnen Steuerscheiben jeweils der gleiche Durchtrittsquerschnitt entsprechend der Überlappung der Ausnehmungen 31, 31a, 31b usw. auftritt.

Durch diese hintereinander geschalteten, verkleinerten Durchtrittsquerschnitte, die Drosselstellen entsprechen, kann ein hoher Druck der an der Eintrittsseite bei X eintretenden Flüssigkeit stufenweise an den einzelnen Drosselstellen abgebaut werden bis zum Austritt bei Y. Durch die in Abständen hintereinander angeordneten Drosselstellen können Differenzdrücke von 2 bis 300 bar stufenweise abgebaut werden, wobei auch sehr geringe Durchtrittsmengen im Bereich von Mikrolitern und Nanolitern möglich sind.

Wenn die Steuerscheiben gegenüber der Darstellung in Fig. 2 relativ zueinander verdreht sind, so dass sich an den überlappenden Ausnehmungen 31, 31 a, 31 b usw. Drosselstellen durch eine Querschnittsverengung bilden, ergeben sich zwischen den einzelnen Drosselstellen im Querschnitt vergrößerte Kanalabschnitte, weil die aus einer Drosselstelle austretende Flüssigkeit durch den vollen Querschnitt einer Durchtrittsbohrung 30 strömt, bevor sie in die nächste Drosselstelle eintritt. Hierdurch ergibt sich eine Stufendrossel mit Expansion zwischen den Drosselstellen für den Druckabbau.

Eine derartige Durchflusssteuervorrichtung kann in der Biotechnologie, in der Feinchemie und auf verschiedenen Einsatzgebieten verwendet werden.

Anstelle der bei dem dargestellten Ausführungsbeispiel vorgesehenen neun Steuerscheiben kann auch eine geringere Anzahl von Steuerscheiben bzw. eine größere Anzahl vorgesehen werden. Beispielsweise ist es auch möglich, lediglich eine verdrehbare Steuerscheibe zwischen den stationären Steuerscheiben 10 und 18 vorzusehen.

Die Steuerscheiben können aus Keramikmaterial oder auch aus einem Kunststoff wie Teflon gefertigt sein, wobei die aneinanderliegenden Seitenflächen derart glatt ausgebildet sind, dass sie durch die Vorspannung der Tellerfeder 19 dicht aneinanderliegen. Weiterhin können nicht dargestellte Druckausgleichskanäle an den einzelnen Steuerscheiben vorgesehen werden, um die Druckbeaufschlagung in Achsrichtung der Durchflusssteuervorrichtung auszugleichen.

Die mittige Bohrung 34 an den verdrehbaren Steuerscheiben 11, 13, 15 und 17 hat einen Durchmesser, der gleich oder etwas größer ist als der Außendurchmesser der Verzahnung an der Steckachse 9, so dass diese verdrehbaren Steuerscheiben leicht auf der Steckachse verdreht werden können. Durch die keilförmigen Mitnehmernuten 24 ist eine spielfreie Justierung der verdrehbaren Steuerscheiben mit dem Schneckenrad 21 über die Madenzentrierschrauben 23 möglich.

Bei der Ausrichtung der Durchtrittsbohrungen 30 entsprechend der Darstellung in Fig. 2, also bei durchgehend vollem Durchtrittsquerschnitt, kann die Vorrichtung von einer Spülflüssigkeit durchströmt werden, wobei auch eine Kugel durch die Durchflusssteuervorrichtung geleitet werden kann, um die Durchtrittskanäle zu reinigen.

Fig. 6 zeigt schematisch eine beispielsweise Antriebseinreichtung des Schneckenrades 21 über die Schnecke 22, die in dem Ansatz 2' des Gehäuses verdrehbar gelagert ist. Bei dem dargestellten Ausführungsbeispiel ist ein Taumellenker 40 zwischen der Schnecke 22 und einer im Gehäuseansatz 2' gelagerten Welle 41 vorgesehen, der durch eine steife Membran 42 geführt wird, die einerseits einen Anlenkpunkt für den Taumellenker 40 bildet und andererseits das Gehäuse gegenüber der Antriebseinheit abdichtet.

Mit 43 ist ein Radialgleitlager für die Schnecke 22 bezeichnet, die an dem gegenüberliegenden Ende an einem Axiallager 44 anliegt und zusätzlich durch ein Radiallager 45 im Gehäuse gelagert ist. Mit 46 ist ein Distanzring zwischen dem Axiallager 44 und einem Ring 47 bezeichnet, der die Membran 42 hält und auf dem Außenumfang durch eine Dichtung, beispielsweise einem O-Ring 48 gegenüber dem Gehäuse abgedichtet ist.

Auf der Welle 41 kann eine nicht dargestellte Dichtungspackung und eine entsprechende Lagerung vorgesehen sein.

An dem Kupplungs- und Dichtungsadapter 3 können, wie Fig. 1 zeigt, Sichtfenster 50 vorgesehen sein, durch die die Abdichtung der Durchflusssteuervorrichtung gegenüber der Antriebseinheit überwacht werden kann.

Die beschriebene Durchflusssteuervorrichtung bildet eine Mikrodosierarmatur, mittels der auch sehr kleine Durchflussmengen sehr genau gesteuert werden können.

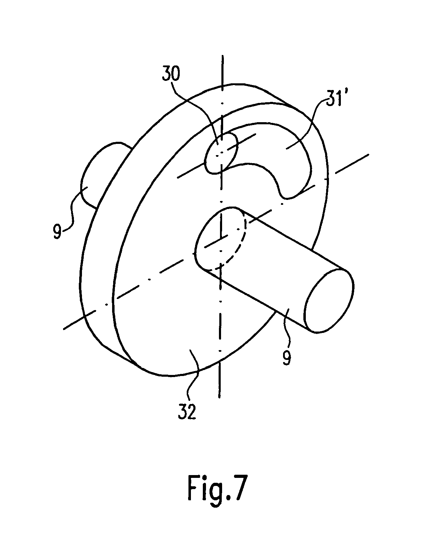

Nach einer weiteren Ausgestaltung der Erfindung können die seitlichen Ausnehmungen 31 je nach Einsatzgebiet der Durchflusssteuervorrichtung auch eine andere als die dargestellte Form haben, bei der Breite und Tiefe der Ausnehmung 31 sich ausgehend von der Durchtrittsbohrung 30 auf den Betrag Null verjüngt. So können beispielsweise die Ausnehmungen im überlappenden Zustand einen Durchflussquerschnitt bilden, der dem der Durchtrittsbohrungen 30 entspricht, so dass durch Verdrehen der Steuerscheiben relativ zueinander ausgehend von einer Stellung, in der die Durchtrittsbohrung 30 miteinander fluchten und die kürzeste Durchflussstrecke durch die Vorrichtung bilden, der Durchflussweg durch die Vorrichtung dadurch verlängert werden kann, dass zwischen aufeinanderfolgenden Durchtrittsbohrungen 30 ein sich in Umfangsrichtung erstreckender Kanal ausgebildet wird. Fig. 7 zeigt entsprechend Fig. 3 eine Steuerscheibe mit einer Ausnehmung 31', die mit der gegenüberliegenden Ausnehmung einen Kanal bildet, dessen Querschnitt dem der Durchtrittsbohrungen 30 entspricht und der sich über einen Winkelbereich von etwa 45° erstreckt. Diese Ausnehmung 31' kann sich aber auch über einen größeren Winkelbereich erstrecken.

Auch bei einer Ausgestaltung der Steuerscheiben nach Fig. 7 können Drosselstellen dadurch ausgebildet werden, dass sich die gegenüberliegenden Ausnehmungen 31 nur an den Enden überlappen. Hierfür können die Enden anstelle der abgerundeten Formgebung auch eine spitz zulaufende Form haben. Bei einer solchen Ausgestaltung wird das Volumen zwischen den Drosselstellen durch die Erstreckung der Ausnehmungen in Umfangsrichtung zur Durchtrittsbohrung 30 hin vergrößert.

Dieser durch die sich überlappenden Ausnehmungen 31' in Umfangsrichtung verlaufende Kanal kann - wie zuvor angegeben - einen Durchflussquerschnitt entsprechend dem der Durchtrittsbohrungen 30 beispielsweise für hoch viskose Flüssigkeiten wie Klebstoffe und dergleichen haben. Es ist aber auch möglich, diese Ausnehmungen 31' über einen kürzeren Umfangsabschnitt als dargestellt, sich verjüngend auszubilden, so dass sich bei Überlappen der Ausnehmungen 31' ein sich im Durchflussquerschnitt verjüngender Verbindungskanal zwischen den Durchtrittsbohrungen 30 ergibt. Bei einer solchen Ausgestaltung erstreckt sich beispielsweise die in Fig. 3 dargestellte Ausnehmung 31 auf einer Steuerscheibe etwa um einen Viertelkreis anstelle eines Halbkreises.

Zusätzlich kann der durch die Ausnehmungen 31 gebildete Durchflussquerschnitt auch durch eine sich über den Umfang verändernde Form der Ausnehmung 31 verändert werden, beispielsweise indem die sich in Umfangsrichtung erstreckenden Ausnehmungen 31 Einbuchtungen oder in die Ausnehmung vorstehende Vorwölbungen aufweisen, durch die Hindernisse oder Querschnittsveränderungen in dem durch die sich überlappenden Ausnehmungen 31 gebildeten Kanal entstehen, so dass auch eine gewisse Mischwirkung in dem die Vorrichtung durchströmenden Fluid erzeugt wird.

Bei der beschriebenen Durchflusssteuervorrichtung beträgt der Durchmesser der Durchtrittsbohrungen 30 beispielsweise 5 mm. Es können aber auch größere Durchflussquerschnitte bei einer solchen Durchflusssteuerung vorgesehen werden.

## Patentansprüche

1. Durchflusssteuervorrichtung (1), umfassend
wenigstens drei koaxial zueinander angeordnete und dicht aneinanderliegende Steuerscheiben (10, 11, 18), von denen die zwischen stationären Steuerscheiben (10, 18) liegende Steuerscheibe (11) durch eine Betätigungseinrichtung verdrehbar ist,
wobei die Steuerscheiben (10, 11, 18) außermittig eine in Achsrichtung durchgehende Durchtrittsbohrung (30) aufweisen, **dadurch gekennzeichnet, daß** die Steuerscheiben (10, 11, 18) auf den aneinanderliegenden Seitenflächen (32, 33) jeweils eine Ausnehmung (31, 31a, 31b) aufweisen, die von der Durchtrittsbohrung (30) ausgehend sich längs eines Kreisbogens um die Achse der Steuerscheiben (10, 11, 18) erstreckt, so dass bei einer Relativverdrehung der Steuerscheiben (10, 11, 18) zueinander sich nur Teile der gegenüberliegenden Ausnehmung (31, 31a, 31b) überlappen.

2. Durchflusssteuervorrichtung (1) nach Anspruch 1, wobei die an gegenüberliegenden Seitenflächen der Steuerscheiben (10, 11, 18) ausgebildeten Ausnehmungen (31, 31a, 31b) sich gegenläufig in Umfangsrichtung ausgehend von der Durchtrittsbohrung (30) erstrecken.

3. Durchflusssteuervorrichtung (1) nach Anspruch 1, wobei Breite und Tiefe der Ausnehmungen (31) sich ausgehend von der Durchtrittsbohrung (30) bis auf den Betrag Null verjüngen.

4. Durchflusssteuervorrichtung (1) nach Anspruch 1, wobei zwischen stationären Endscheiben (10, 18) abwechselnd verdrehbare und stationäre Steuerscheiben (11-17) angeordnet sind und die zwischen den Endscheiben (10, 18) angeordneten stationären Steuerscheiben (12, 14, 16) wie die verdrehbaren Steuerscheiben (11, 13, 15, 17) auf beiden Seitenflächen jeweils eine kreisbogenförmige Ausnehmung (31) aufweisen.

5. Durchflusssteuervorrichtung (1) nach Anspruch 4, wobei die stationären Steuerscheiben (10, 12, 14, 16, 18) auf einer durchgehenden Achse (9) fixiert sind, während die verdrehbaren Steuerscheiben (11, 13, 15, 17) auf dem Außenumfang eine Eingriffseinrichtung (24) für einen Drehantrieb (20, 22) aufweisen.

6. Durchflusssteuervorrichtung (1) nach Anspruch 5, wobei die Eingriffseinrichtung darin besteht, daß die verdrehbaren Steuerscheiben (11, 13, 15, 17) auf dem Außenumfang keilförmige Zentriemuten (24) aufweisen, in die Madenzentrierschrauben (23) spielfrei eingreifen, die durch eine verdrehbare Hülse (21) geführt sind, welche die Steuerscheiben (10 - 18) umgibt.

7. Durchflusssteuervorrichtung (1) nach Anspruch 6, wobei der Drehantrieb darin besteht, daß die die Steuerscheiben (10-18) umgebende Hülse (21) auf dem Außenumfang mit einem Schneckengewinde (20) versehen ist, mit dem eine Schnecke (22) in Eingriff steht, die von einem Antriebsmotor in Drehung versetzt wird.

8. Durchflusssteuervorrichtung (1) nach Anspruch 1, wobei die Steuerscheiben (10, 11, 18) in einem zweiteiligen Gehäuse (2, 7) angeordnet sind, dessen beide Teile durch eine Schraubhülse (6) miteinander verspannt sind.

9. Durchflusssteuervorrichtung (1) nach Anspruch 1, wobei die Steuerscheiben (10, 11, 18) durch eine Feder (19) in Achsrichtung aneinanderliegend gehalten werden.

## Claims

1. A flow control device (1), comprising at least three control disks (10, 11, 18) which are arranged coaxially with respect to one another and lie tightly against one another, from which the control disk (11) lying between stationary control disks (10, 18) can rotate through an actuating device, the control disks (10, 11, 18) having a through-bore (30) arranged eccentrically and leading through in the axial direction, **characterized in that** the control discs (10, 11, 18) have, on the side faces (32, 33) lying against one another, in each case a recess (31, 31a, 31b) which, starting from the through-bore (30), extends along an arc of a circle about the axis of the control disks (10, 11, 18), so that if the control disks (10, 11, 18) rotate relatively toward each other, only parts of the opposite recess (31, 31a, 31b) overlap.

2. The flow control device (1) as claimed in claim 1, in which the recesses (31, 31a, 31b) formed on opposite side faces of the control disks (10, 11, 18) extend in the opposite direction in the circumferential direction, starting from the through-bore (30).

3. The flow control device (1) as claimed in claim 1, in which the width and depth of the recesses (31) taper to zero starting from the through-bore (30).

4. The flow control device (1) as claimed in claim 1, in which rotatable and stationary control disks (11-17) are arranged alternately between stationary end disks (10, 18), and the stationary control disks (12, 14, 16) arranged between the end disks (10, 18), and the rotatable control disks (11, 13, 15, 17) each have a recess (31) in the form of an arc of a circle on both side faces.

5. The flow control device (1) as claimed in claim 4, in which the stationary control disks (10, 12, 14, 16, 18) are fixed on a shaft (9) passing through them, whereas the rotatable control disks (11, 13, 15, 17) have, on the outer circumference, an engagement means (24) for a rotary drive mechanism (20, 22).

6. The flow control device (1) as claimed in claim 5, in which the engagement means consists in that the rotatable control disks (11, 13, 15, 17) have, on the outer circumference, wedge-shaped centering grooves (24) into which centering grub screws (23) engage free from play, these being guided through a rotatable sleeve (21) which surrounds the control disks (10-18).

7. The flow control device (1) as claimed in claim 6, in which the rotary drive mechanism consists in that the sleeve (21) on the outer circumference surrounding the control disks (10-18) is provided with a worm thread (20) with which a worm (22), set in rotation by a drive motor, is in engagement.

8. The flow control device (1) as claimed in claim 1, in which the control disks (10, 11, 18) are arranged in a two-part housing (2, 7), both parts of which are clamped together by a screw-on sleeve (6) .

9. The flow control device (1) as claimed in claim 1, in which the control disks (10, 11, 18) are held lying against one another in the axial direction by a spring (19).

## Revendications

1. Dispositif de réglage de débit (1), comprenant au moins trois plateaux de commande (10, 11, 18) disposés coaxialement les uns par rapport aux autres et placés de façon étanche les uns contre les autres, parmi lesquels le plateau de commande (11) situé entre les plateaux de commande fixes (10, 18) peut être pivoté par un système de commande, les plateaux de commande (10, 11, 18) comportant un alésage de passage (30) excentré traversant dans une direction axiale, **caractérisé en ce que** les plateaux de commande (10, 11, 18) comportent respectivement un évidement (31, 31a, 31b) sur les surfaces latérales (32, 33) situées l'une contre l'autre, lequel évidement s'étend le long d'un arc de cercle autour de l'axe des plateaux de commande (10, 11, 18) en s'éloignant de l'alésage de passage (30), de sorte que lors d'une rotation relative des plateaux de commande (10, 11, 18) les uns par rapport aux autres, seules des parties des évidements opposés (31, 31a, 31b) se chevauchent.

2. Dispositif de réglage de débit (1) selon la revendication 1, dans lequel les évidements (31, 31a, 31b) formés sur des surfaces latérales opposées des plateaux de commande (10, 11, 18) s'étendent à l'opposé selon une direction circonférentielle en s'éloignant de l'alésage de passage (30).

3. Dispositif de réglage de débit (1) selon la revendication 1, dans lequel la largeur et la profondeur des évidements (31) se rétrécissent en s'éloignant de l'alésage de passage (30) jusqu'à la valeur zéro.

4. Dispositif de réglage de débit (1) selon la revendication 1, dans lequel des plateaux de commande (11-17) fixes et rotatifs alternants sont disposés entre des plateaux d'extrémité (10, 18) fixes et les plateaux de commande (12, 14, 16) fixes disposés entre les plateaux d'extrémité (10, 18) comme les plateaux de commande (11, 13, 15, 17) rotatifs comportent respectivement un évidement (31) en forme d'arc de cercle sur deux surfaces latérales.

5. Dispositif de réglage de débit (1) selon la revendication 4, dans lequel les plateaux de commande (10, 12, 14, 16, 18) fixes sont fixés sur un axe traversant (9), alors que les plateaux de commande (11, 13, 15, 17) rotatifs comportent un système d'engrènement (24) sur le périmètre externe pour un entraînement rotatif (20, 22).

6. Dispositif de réglage de débit (1) selon la revendication 5, dans lequel le système d'engrènement consiste en ce que les plateaux de commande (11, 13, 15, 17) rotatifs comportent sur le périmètre externe des rainures de centrage (24) cunéiformes, dans lesquelles s'engrènent sans jeu des vis de centrage sans tête (23), qui sont guidées par une douille (21) rotative, laquelle entoure les plateaux de commande (10-18).

7. Dispositif de réglage de débit (1) selon la revendication 6, dans lequel l'entraînement rotatif consiste en ce que la douille (21) entourant les plateaux de commande (10-18) est prévue sur le périmètre externe avec un filetage (20), avec lequel une vis sans fin (22) est prise, laquelle est réglée en rotation par un moteur d'entraînement.

8. Dispositif de réglage de débit (1) selon la revendication 1, dans lequel les plateaux de commande (10, 11, 18) sont disposés dans un logement à deux parties (2, 7), dont les deux parties sont serrées l'une avec l'autre par une douille à vis (6).

9. Dispositif de réglage de débit (1) selon la revendication 1, dans lequel les plateaux de commande (10, 11, 18) sont maintenus les uns contre les autres dans la direction axiale par un ressort (19).
